# EUROPÄISCHE PATENTSCHRIFT

(11) **EP 2 421 010 B1**
(45) Veröffentlichungstag und Bekanntmachung des Hinweises auf die Patenterteilung: **17.07.2019**
(21) Anmeldenummer: 10305897.0
(22) Anmeldetag: 19.08.2010
(51) Int. Cl.: H01B 9/00, G02B 6/44, H01B 13/02

(54) **Anordnung zur Übertragung von elektrischer Energie und/oder nachrichtentechnischen Signalen**
Assembly for transferring electrical energy and/or messaging signals
Agencement destiné à la transmission d'énergie électrique et/ou de signaux par une technique de télécommunication

(43) Veröffentlichungstag der Anmeldung: 22.02.2012
(73) Patentinhaber: Nexans, 92400 Courbevoie (FR)
(72) Erfinder: Stürmer, Michael, 32584, Löhne (DE); Schick, Sebastian, 30163, Hannover (DE); Gauler, Volker, 30900, Wedemark (DE)
(74) Vertreter: Lenne, Laurence

(56) Entgegenhaltungen:
- EP-A1- 0 135 132
- JP-A- 6 124 612
- JP-A- 2002 140 942
- JP-A- 2004 309 755
- US-A1- 2009 242 228

## Beschreibung

Die Erfindung bezieht sich auf eine Anordnung gemäß dem Oberbegriff des Patentanspruchs 1 (JP 2004 309755 A).

Eine solche Anordnung wird mit Vorteil in modernen Energieverteilungsnetzen eingesetzt. Das dabei verwendete Kabel ermöglicht nicht nur eine Energieübertragung, sondern auch die Übertragung nachrichtentechnischer Signale bzw. Daten über in dem Rohr angeordnete Lichtwellenleiter (LWL). Die nachrichtentechnischen Signale können dabei grundsätzlich unabhängig von der Energieübertragung beispielsweise zu Teilnehmern eines Fernmeldenetzes übertragen werden. Es ist jedoch auch möglich, die LWL zur Übertragung von Signalen bzw. Daten zu verwenden, die als Steuersignale zu Einheiten des Energieverteilungsnetzes übertragen werden, beispielsweise zu Transformatoren. Mittels der LWL können auch die Daten von Stromverbrauchszählern zu einer Zentrale übertragen werden, welche bei an das jeweilige Energieverteilungsnetz angeschlossenen Verbrauchern installiert sind.

Das bei der bekannten Anordnung nach der EP 0 135 132 A1 eingesetzte Kabel hat drei isolierte elektrische Leiter und drei Leerrohre, die in den außen liegenden Zwickeln zwischen den Leitern liegen. In die Leerrohre können bei Bedarf LWL eingezogen werden. Neben den Leerrohren sind in den Zwickeln Beiläufe angebracht, welche die Leerrohre nach außen abdecken. Der gesamte Aufbau des Kabels ist von einer Armierung und einem über derselben angebrachten Mantel aus Isoliermaterial umgeben.

Die JP 2002 140942 A beschreibt eine Anordnung mit drei elektrischen Leitern und einem Rohr, das mindestens einen Lichtwellenleiter enthält. Diese vier Elemente verlaufen parallel zueinander. Sie sind durch mindestens einen Faden zusammengehalten, der um dieselben herumgewickelt ist. Es können mehrere Fäden um die vier Elemente herumgewickelt sein, die alle in der gleichen Richtung oder auch teilweise in entgegengesetzter Richtung um die vier Elemente herumgewickelt sind. Die Anordnung dient zur Versorgung eines Hauses. Sie ist an Masten aufgehängt.

Das bei der eingangs beschriebenen bekannten Anordnung eingesetzte Kabel nach der EP 0 135 132 A1 hat drei isolierte elektrische Leiter und drei Leerrohre, die in den außen liegenden Zwickeln zwischen den Leitern liegen. In die Leerrohre können bei Bedarf LWL eingezogen werden. Neben den Leerrohren sind in den Zwickeln Beiläufe angebracht, welche die Leerrohre nach außen abdecken. Der gesamte Aufbau des Kabels ist von einer Armierung und einem über derselben angebrachten Mantel aus Isoliermaterial umgeben.

Der Erfindung liegt die Aufgabe zugrunde, die eingangs geschilderte Anordnung einfacher zu gestalten.

Diese Aufgabe wird entsprechend den kennzeichnenden Merkmalen des Patentanspruchs 1 gelöst.

Bei dieser Anordnung ist ein sehr einfach aufgebautes Kabel eingesetzt, das ohne äußere, schützende Aufbauten, insbesondere ohne äußeren Mantel auskommt. Die Elemente des Kabels sind in offener Verseilung miteinander verseilt und durch die Verseilung in einer gut biegbaren aber stabilen Einheit zusammengehalten. Das Kabel ist in üblicher Technik zwischen zwei zu verbindenden Einheiten verlegt, und zwar direkt im Erdboden oder innerhalb eines bestehenden Kabelkanals oder Rohrs, in den bzw. das es zu seiner Verlegung eingezogen wird. Ein wesentlicher Vorteil der Anordnung besteht neben der Materialersparnis und dem verminderten Investitionsaufwand in der offenen Verseilung, durch welche einerseits die Starkstromkabel und andererseits das für die LWL bestimmte Rohr direkt zugänglich sind, ohne daß irgendwelche Schichten entfernt werden müssen. Das gilt mit besonderem Vorteil für das Rohr, das in vorteilhafter Weise außerhalb von Verbindungsmuffen geführt werden kann, in denen die Starkstromkabel miteinander elektrisch leitend verbunden sind. Dieser Vorteil des außen liegenden Rohres gilt beispielsweise für das Einbringen von LWL in dasselbe, wenn das Rohr als Leerrohr ausgeführt ist, und auch für Arbeiten an den LWL, wenn dieselben sich bereits in dem Rohr befinden.

Ein Ausführungsbeispiel des Erfindungsgegenstandes ist in den Zeichnungen dargestellt.

Es zeigen:
Fig. 1 in rein schematischer Darstellung eine Anordnung nach der Erfindung.
Fig. 2 einen Querschnitt eines in der Anordnung verwendbaren Kabels.
Fig. 3 einen Querschnitt eines in dem Kabel nach Fig. 2 eingesetzten Starkstromkabels.

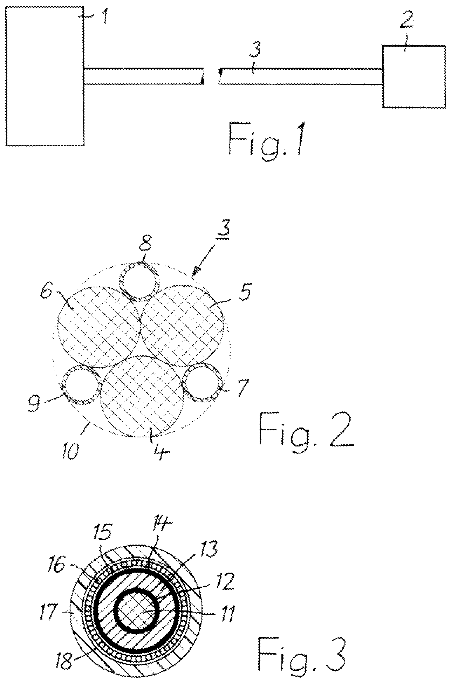

In Fig. 1 sind zwei elektrische Einheiten 1 und 2 schematisch angedeutet, die durch ein elektrisches Kabel 3 miteinander verbunden sind, dessen Aufbau beispielsweise aus Fig. 2 hervorgeht. In den elektrischen Einheiten 1 und 2 sind elektrische Geräte vorhanden. Die Einheit 1 kann beispielsweise eine Umspannstation eines Stromversorgungsnetzes sein. Die Einheit 2 kann beispielsweise ein Verteiler sein, an den eine Vielzahl von Haushalten angeschlossen ist. Zwischen den Einheiten 1 und 2 sollen elektrische Energie und nachrichtentechnische Signale übertragen werden. Das Kabel 3 kann in üblicher Technik zwischen den beiden Einheiten 1 und 2 angeordnet sein. Es kann also beispielsweise direkt im Erdboden verlegt oder auch in bestehende Kabelkanäle oder Rohre eingezogen sein.

Das Kabel 3 weist in dem in Fig. 2 dargestellten Ausführungsbeispiel drei miteinander verseilte Starkstromkabel 4, 5 und 6 auf. In den außen liegenden Zwickeln zwischen den Starkstromkabeln sind Rohre 7, 8 und 9 angeordnet, die zur Aufnahme von Lichtwellenleitern dienen. Das Kabel 3 soll mindestens zwei Starkstromkabel und mindestens ein Rohr aufweisen. Es können aber auch mehr als drei Starkstromkabel und mehr als drei Rohre sein. Das aus Fig. 2 ersichtliche Kabel stellt die bevorzugte Ausführungsform desselben dar. Die jeweils drei Starkstromkabel 4, 5 und 6 sowie Rohre 7, 8 und 9 sind miteinander verseilt und bilden in offener Verseilung das Kabel 3 als zusammenhängende Einheit, dessen Außenabmessungen durch den in Fig. 2 gestrichelt eingezeichneten Umkreis 10 gegeben sind. Alle Elemente des Kabels 3 sollen vorzugsweise innerhalb des Umkreises 10 liegen. Dabei können die Rohre 7, 8 und 9 auch unterschiedliche Durchmesser haben. Sie müssen nicht bis an den Umkreis 10 heranreichen. Irgendwelche Abdeckungen oder Umhüllungen sind für das Kabel 3 nicht vorgesehen und insbesondere auch für seine Verlegung nicht erforderlich.

Die drei Starkstromkabel 4, 5 und 6 können beispielsweise entsprechend Fig. 3 aufgebaut sein:
Jedes der drei Starkstromkabel 4, 5 und 6 ist ein eigenes, voll funktionsfähiges Gebilde mit einem elektrischen Leiter 11, einer denselben umgebenden inneren Leitschicht 12, einer darüber angeordneten, beispielsweise aus vernetztem Polyethylen bestehenden Isolierung 13 und einer dieselbe umgebenden äußeren Leitschicht 14. Die Starkstromkabel 4, 5 und 6 können außerdem als Teil einer Feuchtigkeitssperre eine über der äußeren Leitschicht 14 liegende, rundum geschlossene Schicht aus einem Quellband 15 haben, das bei Wasserzutritt quellendes Material aufweist. Über dem Quellband 15 können ein elektrisch wirksamer Schirm 16 und ein äußerer Mantel 17 aus Isoliermaterial angeordnet sein. Der Schirm 16 kann aus um das Quellband 15 gewickelten Kupferdrähten mit darüber liegender Querleitwendel oder aus Kupferbändern bestehen. Über dem Schirm 16 kann eine aus Krepppapier oder Quellvliesen bestehende Trennschicht 18 angeordnet sein. Die Trennschicht 18 kann auch von einem der Querwasserdichtigkeit dienenden, copolymerbeschichteten Aluminiumband umgeben sein, das eine rundum geschlossene Hülle bildet. Der Mantel 17 besteht beispielsweise aus Polyethylen.

Die Rohre 7, 8 und 9 bestehen mit Vorteil aus mechanisch stabilem Kunststoff, wie beispielsweise Polyethylen. Sie können im Aufbau des Kabels 3 als Leerrohre angebracht sein, in die auch nach der Verlegung des Kabels 3 Lichtwellenleiter eingezogen bzw. eingeblasen werden können. Sie können aber auch bereits bei der Herstellung des Kabels 3 mit Lichtwellenleitern bestückt werden.

## Patentansprüche

1. Anordnung zur Übertragung von elektrischer Energie und
nachrichtentechnischen Signalen, bei welcher ein Kabel eingesetzt ist, das miteinander verseilte, einen isolierten elektrischen Leiter aufweisende Energie-Adern und zumindest ein in einem der außen liegenden Zwickel zwischen den Energie-Adern angeordnetes Rohr zur Aufnahme von Lichtwellenleitern umfaßt,
wobei als Energie-Adern mit einem Mantel (17) aus Isoliermaterial ausgerüstete Starkstromkabel (4,5,6) eingesetzt sind, die zusammen mit dem Rohr (7,8,9) zu einer Einheit verseilt sind,
**dadurch gekennzeichnet.**
- **dass** die Einheit aus Starkstromkabeln (4,5,6) und Rohr (7,8,9) in offener Verseilung ohne zusätzliche, die Energie-Adern und das Rohr umgebende Elemente in eiinem Energieverteilungsnetz in üblicher Technik zwischen zwei zu verbindenden, elektrische Geräte aufweisenden Einheiten (1,2) verlegt ist, und zwar direkt im Erdboden oder innerhalb eines bestehenden Kabelkanals oder Rohrs.

2. Anordnung nach Anspruch 1, **dadurch gekennzeichnet, dass** in jedem der Zwickel zwischen den Energie-Adern (4,5,6) ein Rohr (7,8,9) angeordnet ist.

3. Anordnung nach Anspruch 1 oder 2, **dadurch gekennzeichnet, dass** die Starkstromkabel (4,5,6) einen elektrisch wirksamen Schirm (16) aufweisen.

4. Anordnung nach Anspruch 1 oder 2, **dadurch gekennzeichnet, dass** die Starkstromkabel (4,5,6) längswasserdicht sind.

## Claims

1. Arrangement for the transmission of electrical energy and messaging signals, wherein a cable is used in which are stranded together, an insulated electrical conductor comprising energy leads and at least one pipe arranged in one of the external gussets between the energy leads to receive fiber optic cables, wherein power cables (4, 5, 6) are used as energy leads with a sheath (17) made of insulating material, which are stranded together with the pipe (7, 8, 9) to form an assembly,
**characterized in that**
the assembly formed by the power cables (4, 5, 6) and the pipe (7, 8, 9) is laid directly in the ground or within an existing cable duct or pipe without any additional elements surrounding the energy leads and the pipe in a power distribution network, as conventionally used between two assemblies (1, 2) comprising electrical devices to be connected together.

2. Arrangement according to claim 1, **characterized in that** a pipe (7, 8, 9) is arranged in each of the gussets between the energy leads (4, 5, 6).

3. Arrangement according to claim 1 or 2, **characterized in that** the power cables (4, 5, 6) have an electrically-active screen (16).

4. Arrangement according to claim 1 or 2, **characterized in that** the power cables (4, 5, 6) are longitudinally watertight.

## Revendications

1. Dispositif de transmission d'énergie électrique et de signaux de communication, dans lequel un câble est utilisé, qui comprend des fils conducteurs d'énergie câblés entre eux, comprenant un conducteur électrique isolé et un tube disposé dans un des soufflets externes entre les fils conducteurs d'énergie, pour le logement de fibres optiques, les fils conducteurs d'énergie étant des câbles à courant fort (4, 5, 6) munis d'une enveloppe (17) en matériau isolant, qui sont câblés avec le tube (7, 8, 9) en une unité,
**caractérisé en ce que**
- l'unité constituée des câbles à courant fort (4, 5, 6) et du tube (7, 8, 9) est posé avec un câblage ouvert sans éléments supplémentaires entourant les fils conducteurs d'énergie et le tube, dans un réseau de distribution d'énergie de conception habituelle, entre deux unités (1, 2) comprenant des appareils électriques à relier, à savoir directement dans le sol ou à l'intérieur d'une goulotte de câble ou d'un tube existant.

2. Dispositif selon la revendication 1, **caractérisé en ce que**, dans chacun des soufflets entre les fils conducteurs d'énergie (4, 5, 6), est disposé un tube (7, 8, 9).

3. Dispositif selon la revendication 1 ou 2, **caractérisé en ce que** les câbles à courant fort (4, 5, 6) comprennent un blindage électrique (16).

4. Dispositif selon la revendication 1 ou 2, **caractérisé en ce que** les câbles à courant fort (4, 5, 6) sont étanches aux écoulements d'eau longitudinaux.
